# EUROPEAN PATENT SPECIFICATION

(11) **EP 3 465 154 B1**
(45) Date of publication and mention of the grant of the patent: **27.07.2022**
(21) Application number: 17737357.8
(22) Date of filing: 25.05.2017
(51) Int. Cl.: G01N 21/49, G01N 21/85, G01N 21/63, H01S 3/00, H01S 3/08, H01S 3/213

(54) **A RANDOM LASER BASED OPTICAL SENSOR**
AUF RANDOM-LASER BASIERENDER OPTISCHER SENSOR
CAPTEUR OPTIQUE BASÉ SUR UN LASER ALÉATOIRE

(30) Priority: 26.05.2016 IT UA20163837
(43) Date of publication of application: 10.04.2019
(73) Proprietor: Universita' Degli Studi di Firenze, 50121 Firenze (IT)
(72) Inventor: CAVALIERI, Stefano, 50100 Firenze (IT); FINI, Lorenzo, 50100 Firenze (IT); IGNESTI, Emilio, San Miniato (Pisa) (IT); TOMMASI, Federico, Pontassieve (Firenze) (IT); MARTELLI, Fabrizio, Carmignano (Prato) (IT)
(74) Representative: Nesti, Antonio
(86) International application number: PCT/IB2017/000635
(87) International publication number: WO 2017/203351

(56) References cited:
- WO-A1-2010/024466
- CN-A- 104 501 843
- US-A- 5 448 582
- US-A1- 2011 266 470

## Description

### Field of the Invention

The invention relates to a method involving the use of an optical sensor based on random laser technology, the sensor being suitable for characterizing the optical properties of diffusive samples, in particular, but not exclusively, of biological tissues.

### State of the Art

At present, applications of random laser technology or of the use of active amplifying materials are known.

Specifically, CN103376120 describes a system that allows the transmission of the random laser signal at long distances through optical fibres. CN101867144 describes a method for adjusting the wavelength of a random laser.

EP2697858 describes a system for capturing images using a random laser system for lighting the sample, whose applications may also include medical field analysis.

CN104501843 A describes a sensor comprising a random laser consisting of an optical fibre containing an active material and a diffusing material. The optical fibre is surrounded by a hollow glass tube where the liquid or gaseous sample can flow. The random laser emission characteristics are altered by sample diffusion properties. However, laser emission occurs also in absence of a diffusive sample in the tube.

The random laser interaction with the sample is limited to evanescent waves. The system is presented as usable for the determination of concentrations and particle sizes.

US2011/266470 A1 describes apparatuses, methods and systems for generating an optical radiation from biological media with optical gain. This work involves the creation of tablets or spheres containing fluorescent proteins to be injected into an external medium for analysis of the same. This method creates an irreversible alteration of the investigated medium and causes the excitation signal, usually of high intensity, to come into direct contact with the medium to be analysed and cause an alteration. This makes the described system invasive and dangerous for *in vivo* measurements.

US5448582 A describes optical sources consisting of highly diffused active media that generate laser-type emission. These do not provide separation between the diffusing medium and the active medium.

WO 2010/024466 A1 describes an apparatus and method for analysing modes in an optical cavity. These methods involve the presence of particles coupled with an optical fibre in which, however, the two elements, particle and fibre, are separated and therefore the pump and signal impulses must pass through the medium being investigated after leaving the active medium before entering the analysis path, the pump signal becoming potentially dangerous and a source of medium alteration.

The known solutions, however, are not applicable to the measurement and characterization of diffusive samples, such as, in particular but not exclusively, biological tissues, without definitively altering the properties, or are limited to liquid or gaseous samples that need to be inserted in a suitable detector chamber, preventing *in vivo* analysis.

In the literature, studies have also been carried out for the application of the stimulated emission to increase detection sensitivity of fluorescence signals or light diffused by biological samples.

Some use the conventional laser effect by injecting or contacting the tissue to be analysed with microresonators. In some studies, the principle of the random laser sensor has been tested on various types of biological material such as animal tissues.

A difference was also observed in the random laser spectrum emitted by a human cancerous tissue treated with an organic dye compared to the spectrum emitted by a healthy tissue under the same conditions.

However, all the different techniques mentioned in these studies have the drawback of requiring the injection of generally and potentially toxic external substances into the sample to be analysed.

This determines, on the one hand, the possible alteration of the properties of the sample to be analysed and, on the other hand, the inability to perform *in vivo* measurements.

The need is therefore felt for a sensor capable of performing *in vivo* measurements in order to carry out non-invasive diagnostic measures.

### Object of the Invention

The object of the present invention is therefore to propose a method based on a random laser sensor.

### Summary of the Invention

These and other objects have been achieved by method according to one or more of the appended claims. Advantageously, the sensor used in the invention exploits the random laser principle, in which the optical feedback is not constituted by a resonant cavity, as in a conventional laser, but rather by diffusion processes which, by increasing the path of light through the active medium, can increase the gain to the point of overcoming the losses and trigger a laser emission, the characteristics of which (intensity, spectrum, spatial and temporal consistency) are strongly determined and representative of the characteristics of the diffusing medium.

Therefore, with this sensor, a random laser is formed by an active medium and the diffusing sample to be analysed, and it is possible to obtain sample information by analysing the emitted laser radiation, benefiting from the stimulated emission capacity of amplifying small signals and from the sensitivity of the random laser emission from diffusion properties.

A further advantage of the invention is that the sensor can be used to extract information on the properties of a sample by exploiting the physical principle of the random laser, without contamination of the sample being analysed.

An additional advantage of the invention is that the sensor is of the active type, that is, it takes advantage of the gain properties of an active medium which, if suitably pumped, is capable of amplifying the light through a stimulated emission process.

A further feature of of the invention is that the laser-type emission dominated by the stimulated emission process is obtained only in the presence of the diffusive external sample. In the absence of the sample or with a non-diffusing sample, there is a non-laser-type signal dominated by spontaneous emission. The presence of the sample changes the nature of the emission. This takes advantage of the sensitivity of the emission of a laser near its operating threshold to increase sensitivity of the sensor to sample characteristics.

A further advantage of the invention is that the active medium (a chemically toxic organic dye in the described example) is kept separate from the diffusing sample to be analysed and thus allows it to be used also on *in vivo* tissues, greatly expanding the application scope.

A further advantage of the invention is that the pump laser (which may have an energy density such as to damage the sample) is completely absorbed into the sensor chamber, avoiding reaching the sample. A further advantage of the invention is that the sensor is of small size, totally portable, and can be easily placed in contact with the tissue to be analysed without it being inserted into any external cell.

### List of the Drawings

These and other advantages will be better understood by anyone skilled in the art thanks to the following specification and the accompanying drawings, given as non-limiting examples. In particular:

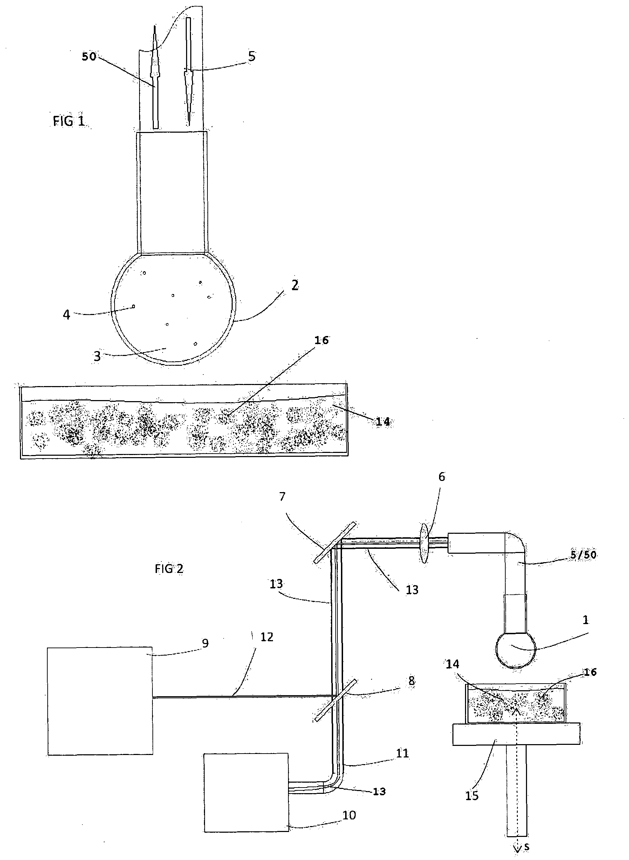

- Fig. 1 shows the random laser technology optical sensor;
- Fig. 2 shows schematically an apparatus for implementing a diagnostic method based on the use of the random laser technology optical sensor.

### Detailed Description

With reference to the accompanying drawings, described herein is a preferred embodiment of an optical sensor based on random laser technology, suitable for characterizing the optical properties of diffusive samples, in particular, but not exclusively, of biological tissues according to the method of the invention.

Described herein is also a diagnostic method based on the use of an optical sensor with random laser technology.

The optical sensor 1 comprises a chamber 2, preferably of a spherical shape, and means 5, 50 for inputting an excitation light signal with adequate energy to activate the active medium and outputting a modified light signal from the chamber, preferably comprising optical fibres.

The chamber 2 is suitable for the containment of an active optical medium 3. Inside the active optical medium, nanoparticles 4 can be dispersed to suppress the conventional laser effect that may be induced by reflections on the walls of the chamber.

The concentration of nanoparticles is low enough to prevent them from triggering random laser action alone.

Preferably, nanoparticles 4 are zinc oxide nanoparticles.

Said chamber 2 is constituted by a transparent wall, preferably made of glass, and is capable of separating the active medium 4-3 from a diffusive sample 14. In the example of the attached drawing, the sample includes a dispersion of particles that diffuse the optical radiation 16.

Preferably, the concentration of said nanoparticles 4 is 1.4 x 10 ⁻¹¹ cm ⁻³.

Preferably, the active medium 4-3 is composed of ethylene glycol to which a dye is added.

Preferably, the dye is a perchlorate, such as Rhodamine.

The diagnostic method based on the use of an optical sensor 1 with random laser technology, as described above, comprises a pump laser 9, preferably a duplicated Nd:YAG laser, a spectrometer 10, a means suitable for transporting the pump light inside the chamber, a means adapted to take the light signal to the chamber. These two means are preferably made up of two optical fibres, or alternatively by a single optical fibre and by a medium 8 for separating the pump light from the signal light, such as, preferably, a dichroic mirror.

In the optical sensor 1 with random laser technology, the active optical medium 3 is driven by pump light 12, preferably with 5 ns pulses at a frequency of 2Hz, transmitted through means 5.

Nanoparticles 4 dispersed within the active medium 3 prevent undesirable laser oscillations of the laser that can be activated by reflection on the wall 2.

The light emitted by the active medium as a result of the excitation by the pump light crosses the transparent walls of the chamber 2 and is diffused into the volume of sample 14.

After a random path through sample 14 comprising a particle dispersion 16, a certain amount of light returns to the chamber 2 of sensor 1.

The sample 14 comprising a dispersion of optical diffusion particles therefore provides sensor 1 with feedback through a radiation emitted in a manner depending on the characteristics of the dispersion and its concentration, enabling its characterization.

Radiation emitted in the form of light crosses the chamber 2 of sensor 1 again and is amplified in the active medium due to the stimulated emission, and through means 50 for the transmission of a light signal provides the signal 13 to be processed for characterization.

In the illustrated diagnostic method, the light 12 is generated by a pump laser 9 and reflected by the medium 8 suitable for the reflection of the pump light, and is again reflected by the means 7 suitable for the reflection of the light towards the lens 6 and then towards the means 5 which transmits it to sensor 1.

The signal 13 returning from sensor 1 is again reflected by means 7 and crosses means 8 suitable for signal transmission, to reach the means 11 suitable for transmitting the signal 13 to the spectrometer 10 for characterizing the same.

In the described example, the sensor 1 is brought into contact with the volume of the sample 14 by the action of the platform 15 movable along the s direction. Thanks to the invention, since the active optical medium 3 containing potentially toxic dyes is kept separate from the volume of the sample 14 by the chamber 2, thus without being contacted, *in vivo* characterization of biological samples is allowed as well.

Therefore, the invention has important application advantages.

A first application of particular interest is that of the diagnostic sector in the medical field.

Further applications can be in quality control, for example in industrial processes, or in the production of scientific instruments for the characterization of optical properties of materials.

In general, the invention is applicable to non-destructive/non-invasive characterization of any type of material exhibiting light diffusion characteristics such as, but not limited to, biological tissue, foodstuffs, powders, liquid suspensions and diffusive surfaces.

The present invention has been described according to preferred embodiments, however equivalent variants can be conceived without departing from the scope of the appended claims.

## Claims

1. Method for the optical investigation of a diffusive sample (14), comprising the following steps:
providing a diffusive sample including a dispersion of optically diffusive particles to be investigated (14),
providing an optical sensor (1) comprising means (5) for sending an excitation light signal (12) to a chamber (2) having a transparent wall and containing an active optical medium (3) and also comprising means (50) for transmitting a return light signal (13) from said chamber (2), representative of the characteristics of said diffusive sample (14),
immersing the chamber (2) in the sample (14),
sending at least one excitation light signal to activate the active optical medium (3) in the chamber (2),
so that light emitted by the active optical medium (3) as a result of the excitation light signal (12) crosses the transparent wall and is diffused in the sample (14)
after a random path through the sample (14) comprising the optical diffusive particles, a certain amount of light returns to the chamber and is amplified in the active medium (3) due to stimulated emission obtaining laser emission ,
wherein said laser emission dominated by the stimulated emission process is obtained only in the presence of the diffusive sample (14), while in absence of the sample or with a non-diffusive sample the emission is dominated by spontaneous emission,
receiving and processing the laser emission as the return light signal representative of the characteristics of the diffusive sample (14).

2. The method of claim 1 in which said step of receiving and processing said return random laser light signal is performed by a spectrometer (10).

3. The method of claim 1 wherein nanoparticles (4) are dispersed within the active optical medium (3) to prevent undesirable laser oscillations of the laser that can be activated by reflection on the wall (2).

4. The method of claim 1 wherein said active optical medium (3) is composed of ethylene glycol in which zinc oxide nanoparticles (4) are dispersed and a dye is added.

5. The method of claim 4 wherein said dye is a perchlorate, such as Rhodamine.

6. The method of claim 1 wherein the means (5) for sending said input light signal and/or means (50) for transmitting said return random laser light signal comprise an optical fibre.

## Patentansprüche

1. Verfahren zur optischen Untersuchung einer Diffusionsprobe (14), das die folgenden Schritte umfasst:
Bereitstellung einer diffusionsfähigen Probe, die eine Dispersion von zu untersuchenden optisch diffusionsfähigen Teilchen enthält (14),
Bereitstellung eines optischen Sensors (1), der ein Mittel (5) zum Senden eines Anregungslichtsignals (12) an eine Kammer (2) mit einer transparenten Wand, die ein aktives optisches Medium (3) enthält, und auch ein Mittel (50) zum Übertragen eines Rücklichtsignals (13) aus der Kammer (2) umfasst, das für die Eigenschaften der Diffusionsprobe (14) repräsentativ ist,
Eintauchen der Kammer (2) in die Probe (14),
Senden mindestens eines Anregungslichtsignals zur Aktivierung des aktiven optischen Mediums (3) in der Kammer (2),
sodass Licht, das von dem aktiven optisch aktiven Medium (3) als Ergebnis des Anregungslichtsignals (12) emittiert wird, die transparente Wand durchquert und
in der Probe (14) nach einem zufälligen Weg durch die Probe (14), die die optischen diffusionsfähigen Teilchen umfasst, gestreut wird, eine bestimmte Menge an Licht in die Kammer zurückkehrt und in dem aktiven Medium (3) aufgrund von stimulierter Emission, die Laseremission erwirkt, verstärkt wird,
wobei die Laseremission, die durch den Prozess der stimulierten Emission dominiert wird, nur in Gegenwart der diffusionsfähigen Probe (14) erhalten wird,
während in Abwesenheit der Probe oder mit einer nichtdiffusionsfähigen Probe die Emission durch spontane Emission dominiert wird,
wobei die Laseremission als Rücklichtsignal, das für die Eigenschaften der Diffusionsprobe (14) repräsentativ ist, empfangen und verarbeitet wird.

2. Verfahren nach Anspruch 1, bei dem der Schritt des Empfangens und Verarbeitens des zurückkehrenden Zufallslaserlichtsignals durch ein Spektrometer (10) ausgeführt wird.

3. Verfahren nach Anspruch 1, bei dem Nanopartikel (4) in dem aktiven optischen Medium (3) dispergiert sind, um unerwünschte Laserschwingungen des Lasers zu verhindern, die durch Reflexion an der Wand (2) aktiviert werden können.

4. Verfahren nach Anspruch 1, wobei das aktive optische Medium (3) aus Ethylenglykol besteht, in dem Zinkoxid-Nanopartikel (4) dispergiert sind und ein Farbstoff zugesetzt ist.

5. Verfahren nach Anspruch 4, wobei der Farbstoff ein Perchlorat, wie z. B. Rhodamin, ist.

6. Verfahren nach Anspruch 1, bei dem das Mittel (5) zum Senden des Eingangslichtsignals und/oder das Mittel (50) zum Übertragen des zufälligen Laserrücklichtsignals eine optische Faser umfasst.

## Revendications

1. Procédé d'examen optique d'un échantillon de diffusion (14), comprenant les étapes suivantes :
la fourniture d'un échantillon de diffusion incluant une dispersion de particules de diffusion optique à examiner (14),
la fourniture d'un capteur optique (1) comprenant un moyen (5) pour envoyer un signal lumineux d'excitation (12) à une chambre (2) comportant une paroi transparente et contenant un milieu optique actif (3) et comprenant également un moyen (50) pour transmettre un signal lumineux de retour (13) depuis ladite chambre (2), représentatif des caractéristiques dudit échantillon de diffusion (14),
l'immersion de la chambre (2) dans l'échantillon (14),
l'envoi d'au moins un signal lumineux d'excitation pour activer le milieu optique actif (3) dans la chambre (2),
de sorte qu'une lumière émise par le milieu optique actif (3) en conséquence du signal lumineux d'excitation (12) traverse la paroi transparente et soit diffusée dans l'échantillon (14),
après un trajet aléatoire à travers l'échantillon (14) comprenant les particules de diffusion optique, une certaine quantité de lumière retourne vers la chambre et est amplifiée dans le milieu actif (3) en raison d'une émission stimulée en obtenant une émission laser,
dans lequel ladite émission laser dominée par le processus d'émission stimulée est obtenue uniquement en présence de l'échantillon de diffusion (14) alors que, en l'absence de l'échantillon ou avec un échantillon qui n'est pas de diffusion, l'émission est dominée par une émission spontanée,
la réception et le traitement de l'émission laser en tant que le signal lumineux de retour représentatif des caractéristiques de l'échantillon de diffusion (14).

2. Procédé selon la revendication 1, dans lequel ladite étape de la réception et du traitement dudit signal lumineux laser aléatoire de retour est réalisée par un spectromètre (10).

3. Procédé selon la revendication 1, dans lequel des nanoparticules (4) sont dispersées à l'intérieur du milieu optique actif (3) pour empêcher des oscillations laser indésirables du laser qui peuvent être activées par réflexion sur la paroi (2).

4. Procédé selon la revendication 1, dans lequel ledit milieu optique actif (3) est composé d'éthylène glycol dans lequel des nanoparticules d'oxyde de zinc (4) sont dispersées et un colorant est ajouté.

5. Procédé selon la revendication 4, dans lequel ledit colorant est un perchlorate, tel que la rhodamine.

6. Procédé selon la revendication 1, dans lequel le moyen (5) pour envoyer ledit signal lumineux d'entrée et/ou le moyen (50) pour transmettre ledit signal lumineux laser aléatoire de retour comprend une fibre optique.
